# EUROPÄISCHE PATENTSCHRIFT

(11) **EP 2 446 293 B1**
(45) Veröffentlichungstag und Bekanntmachung des Hinweises auf die Patenterteilung: **23.01.2013**
(21) Anmeldenummer: 10730748.0
(22) Anmeldetag: 23.06.2010
(51) Int. Cl.: G01S 5/02, G01S 13/74

(54) **SYSTEM UND VERFAHREN ZUR LOKALISATION VON LÖSCHMITTELENTNAHMESTELLEN**
SYSTEM AND METHOD FOR LOCALIZING EXTINGUISHING AGENT WITHDRAWAL SITES
SYSTÈME ET PROCÉDÉ DE LOCALISATION DE POINTS DE PRÉLÈVEMENT D UN AGENT D EXTINCTION

(30) Priorität: 24.06.2009 DE 102009026019
(43) Veröffentlichungstag der Anmeldung: 02.05.2012
(73) Patentinhaber: Von Rüden-Jordan, Christine, 42553 Velbert (DE); Jordan, Robert, 42553 Velbert (DE)
(72) Erfinder: Von Rüden-Jordan, Christine, 42553 Velbert (DE); Jordan, Robert, 42553 Velbert (DE)
(74) Vertreter: Brötz, Helmut
(86) Internationale Anmeldenummer: PCT/EP2010/058912
(87) Internationale Veröffentlichungsnummer: WO 2010/149703

(56) Entgegenhaltungen:
- US-A1- 2009 043 462
- US-B1- 7 099 781

## Beschreibung

Die vorliegende Erfindung betrifft ein System zur Lokalisation von Löschmittelentnahmestellen gemäß Oberbegriff von Anspruch 1.

Bekannt sind Systeme zur Lokalisation von Löschmittelentnahmestellen in Gestalt von Beschilderungen von bspw. Hydranten an Straßen, Gehwegen usw., auch in Kombination mit Verzeichnissen, in welchen die Position von Löschmittelentnahmestellen eingetragen ist und die bspw. in einem Einsatzfahrzeug einer Feuerwehr zu einem Einsatzort mitgeführt werden können. Derartige bekannte Systeme sollen bei Notfällen, insbesondere bei Bränden, Unfällen und dergleichen, die möglichst schnelle Lokalisation bzw. Ortsbestimmung von Löschmittelentnahmestellen ermöglichen und können neben natürlichen Löschmittelentnahmestellen, wie stehenden und fließenden Gewässern, auch künstliche Löschmittelentnahmestellen bzw. -einrichtungen, wie bspw. Hydranten zur Wasserentnahme, Vorratstanks mit Wasser oder anderem Löschmittel oder dergleichen umfassen. Trotz zahlreicher entsprechender Bemühungen wird die Lageerkennung von Löschmittelentnahmestellen noch immer häufig durch praktische Umstände erschwert, bspw. durch widrige Wetterverhältnisse, grobe Verschmutzungen wie Blattwerk und Erde, Beschädigungen oder den Verlust von Beschilderung und/oder durch parkende Autos. Auch befinden sich bspw. zur Wasserentnahme benötigte Hydranten meist integriert in Gehwegen, Plätzen oder Straßen. In ländlichen Regionen können diese jedoch auch abseits befestigter Wege liegen. Vorhandene Beschilderung ist häufig parallel zum Straßenverlauf an Masten befestigt und daher auf Anhieb kaum sichtbar. Häufig hat eine kleine Gruppe von Feuerwehrleuten zunächst die Aufgabe, mit Hilfe oft veralteter Verzeichnisse geeigneter Löschmittel-, insbesondere Wasserentnahmestellen zu lokalisieren. Erst anschließend kann damit begonnen werden, bspw. einen Hydranten oder dergleichen in die Wasserversorgung bspw. zur Brandbekämpfung mit einzubauen.

Ein System gemäß dem Oberbegriff von Anspruch 1 ist im Stand der Technik aus US 2009/0043462 A1 bekannt. Aus US 7,099,781 B1 ist ein transportables Hydrant-Messgerät und ein System zu dessen Verwendung bekannt.

Vor diesem Hintergrund liegt der Erfindung die Aufgabe zugrunde, ein System zur Lokalisation von Löschmittelentnahmestellen vorteilhaft weiterzubilden, so dass insbesondere die zuvor genannten Nachteile möglichst weitgehend vermieden werden können.

Die Aufgabe wird erfindungsgemäß in Verbindung mit den kennzeichnenden Merkmalen von Anspruch 1 gelöst. Dies ermöglicht es, mittels des ersten Funksignals (Anruf- oder Aktivierungssignal) in der Nähe des Einsatzortes befindliche Löschmittelentnahmestellen zur Aussendung jeweiliger sog. zweiter Funksignale (Antwortsignale) zu veranlassen (d. h. zu "aktivieren", wobei diese zweiten und ggf. weitere von den Löschmittelentnahmestellen ausgesandten Funksignale zur Lokalisierung und insbesondere zur Auswahl einer geeigneten Wasserentnahmestelle geeignete Informationen enthalten können, die von der mobilen Lokalisationseinrichtung empfangen und von einer Person, ggf. nach zwischengeschalteter Datenverarbeitung, entsprechend genutzt werden können. Wie nachstehend erläutert, können dabei verschiedene Löschmittelentnahmestellen mittels ihrer jeweiligen bzw. mittels der ihnen jeweils zugeordneten Signalinhaltbereitstellungsmittel bzw. Signalinhaltvorgabemittel ihnen zugeordnete spezifische Informationen, wie insbesondere ihre aktuellen Positions- bzw. Lagekoordinaten, ihre momentane Leistung (insbesondere maximale Durchflussmenge, gespeicherte Löschmittelmenge usw.) und / oder bspw. betreffend die Art der Entnahmestelle (also bspw. Hydrant, Tank, Löschmittelsteigleitung von Gebäuden, Gewässer oder dergleichen) beinhalten. Das erfindungsgemäße System eignet sich damit zur schnellen und exakten Lokalisation von Löschmittelentnahmestellen, bspw. von Hydranten, und kann im Hinblick auf die vorzugsweise Anwendung bei Wasserentnahmestellen auch als Wassersuchsystem (WFS bzw. Water Finding System) bezeichnet werden. Da im Rettungswesen Zeitersparnis sehr oft über Leben und Tod entscheidet, liegen hier die Vorteile der Funktechnik, die eine aufwändige optische Suche unnötig macht und die Kosten für zusätzliche Hydrantenbeschilderung verringert oder evtl. sogar überflüssig macht. Mit dem erfindungsgemäßen System lassen sich bspw. Hydranten oder andere Wasserentnahmestellen auf Anhieb finden, so dass unnötige, zeitraubende Wege erspart bleiben. Auch im Zuge von Neuorganisationen und Zusammenlegungen von Feuerwehren wird ein einheitliches System zur Hydranten-Lokalisation immer interessanter. Die Erfindung ermöglicht bei einer innovativen Anwendung, dass das Drahtlos-System zur metergenauen Ortung von mehreren unbeweglichen Objekten (hier Wasserentnahmestellen, wie bspw. Hydranten) und mit Hilfe eines beweglichen Objektes (hier insbesondere mobiles Anzeigegerät) zum Einsatz kommt. Außerdem erweist sich das erfindungsgemäße System als sinnvoll und hilfreich, da es je nach Ausführung auch ohne das allgemein bekannte Ortungssystem GPS (= Global Positioning System = globales Positionsbestimmungssystem) als praktisch weltweit vorhandenes, satellitengestütztes Navigationssystem funktionsfähig ist. Insofern ergeben sich Vorteile beim Einsatz des erfindungsgemäßen Systems in Tunneln, Gebieten ohne Satellitenempfang oder in geschlossenen Räumen ohne geeigneten GPS-Empfang. Das erfindungsgemäße System kann insbesondere zur Lokalisation von Löschmittelentnahmeeinrichtungen wie bspw. von Hydranten für die Wasserentnahme dienen. Das erfindungsgemäße System kann entweder sogleich eine Anzahl von Löschmittelentnahmestellen, insbesondere Löschmittelentnahmeeinrichtungen wie bspw. Hydranten, beinhalten oder als System zur entsprechenden Ausstattung von bereits vorhandenen Löschmittelentnahmestellen dienen. Zur bevorzugten Weiterbildung besteht die Möglichkeit, dass an zumindest einem oder mehreren Hydranten jeweils ein Lokalisationsmodul angebracht ist. Auch besteht die Möglichkeit, dass das Lokalisationsmodul miteinander gekoppelte Funkwellenaufnahmemittel sowie Signalinhaltbereitstellungsmittel und Funkwellenabgabemittel aufweist. Dabei ist bevorzugt, dass das zweite Funksignal bezüglich seines Signalinhalts von den Signalinhaltbereitstellungsmitteln bereitgestellt wird.

Bevorzugt ist vorgesehen, dass die mobile Lokalisationseinrichtung fest oder lösbar in einem Fahrzeug, wie bspw. einem Einsatzfahrzeug einer Feuerwehr, angeordnet ist und vorzugsweise aufgrund seines geringen Gewichts von einer Person tragbar und dabei mit eigener Energieversorgungseinrichtung (bspw. Batterien, Akkus oder dergleichen) ausgeführt ist. Es besteht die Möglichkeit, dass zur Aussendung des oben genannten ersten Funksignals, das hinsichtlich seiner Funktion bzw. Bedeutung auch als Anruf- oder Aktivierungssignal bezeichnet werden kann, zumindest ein Funksender an der mobilen Lokalisationseinrichtung und/oder in einem Fahrzeug fest oder lose und/oder in einem Gebäude fest oder lose vorgesehen ist. Entsprechend können mehrere derartiger Funksender zum Aussenden des sog. ersten Funksignals, d. h. von Funksignalen diesen ersten Typs bzw. Inhalts, vorgesehen sein. Vorzugsweise, d. h. nicht notwendig, kann die mobile Lokalisationseinrichtung einen zum Empfang von GPS-Funksignalen geeigneten Funkempfänger aufweisen und zur Bestimmung der eigenen Position mittels der GPS-Signale geeignete Datenverarbeitungsmittel. Alternativ kann die mobile Lokalisationseinrichtung die eigene Position mittels Funkzellenortung bestimmen.

Bevorzugt ist vorgesehen, dass von einem bestimmten Lokalisationsmodul abgegebene, vorzugsweise ausgesendete, Funksignale diesem bestimmten Lokalisationsmodul spezifisch zugeordnete Information beinhalten, wobei diese Information wiederum spezifisch auf eine bestimmte Löschmittelentnahmestelle (oder bspw. auf einen bestimmten Typ von Löschmittelentnahmestellen) abgestimmt sein kann, an der das Lokalisationsmodul angeordnet ist oder werden soll bzw. die dem Lokalisationsmodul insofern zugeordnet ist. Bei der in den Funksignalen enthaltenen Information kann es sich insofern vorzugsweise um Information betreffend die Lage bzw. die Koordinaten (bspw. GPS-Koordinaten) der Löschmittelentnahmestelle und / oder die Art der Löschmittelentnahmestelle und / oder die verfügbare Entnahmeleistung oder Kapazität der Löschmittelentnahmestelle und / oder eine Kennbezeichnung (bspw. Kennname oder Kennnummer) der Löschmittelentnahmestelle handeln. Dies erweist sich insbesondere dann als vorteilhaft, wenn das erfindungsgemäße System auch bezüglich verschiedenartiger Wasserentnahmestellen, wie z.B. Löschmittelsteigleitungen in Gebäuden, Schwimmbecken, Löschteiche bzw. idealer Entnahmepunkte an Bach- und Flussläufen, erweitert wird, um eine flächendeckende Versorgung mit dem unverzichtbaren Löschmittel zu gewährleisten. Auch erweist sich als praktisch, im Zuge der Funkortung von bspw. Hydranten gemeinsam mit dem Funksignal für die Lokalisation über eine spezifische Kennung dem mobilen, vorzugsweise kartografischen Anzeigesystem nicht nur die Position, sondern auch die Art und Kapazität der Wasserentnahmestelle anzuzeigen. Kommt es bspw. bei einem Hydranten als Folge von Baumaßnahmen zu einem Positionswechsel, kann dessen Signalinhaltbereitstellungsmittel an seine geänderten bzw. neuen Standortkoordinaten angepasst werden, bspw. durch Umprogrammierung oder durch Austausch des Lokalisationsmoduls. Die mobile Lokalisationseinrichtung kann Anzeigemittel zur Anzeige der Position der Lokalisationseinrichtung und der jeweiligen Position von einer oder mehreren Löschmittelentnahmestellen, bspw. ein multifunktionales Display, aufweisen. Es besteht die Möglichkeit, dass das Display bspw. verschiedene Wasserentnahmestellen kartografisch auch ohne Zusammenhang mit einer GPS-Karte darstellen kann. Mittels eines an der Lokalisationseinrichtung vorhandenen Displays kann auch die Möglichkeit geschaffen sein, ergänzend zu Positionskoordinaten von lokalisierten Löschmittelentnahmestellen auch weiter diesen zugeordnete Informationen darzustellen, wie bspw. den Typ, die, insbesondere momentan, verfügbare Entnahmeleistung oder Kapazität, eine Kennbezeichnung oder dergleichen. Auch kann die Lokalisationseinrichtung in der Weise weitergebildet sein, dass sich bspw. in Hochhäusern alle funktionsfähigen Anschlüsse der eingebauten Löschmittelsteigleitung bzw. von eingebauten Löschmittelsteigleitungen etagenweise erkennen und räumlich darstellen lassen. Auch in diesem Fall ist bevorzugt, dass sich die Art (insbesondere trockene oder nasse Steigleitung), momentane Kapazität und Kennnummer auf dem Display erkennen lassen. Zu diesem Zweck können an den besagten Anschlüssen der Löschmittelsteigleitungen Lokalisationsmodule angeordnet werden, die an eine Aussendung von Signalen mit entsprechendem Informationsinhalt angepasst sind. In vergleichbarer Weise können in das erfindungsgemäße System auch praktisch beliebige weitere Arten von Löschmittelentnahmestellen integriert werden, bspw. Schwimmbecken und/oder andere (auch) private Löschmittelentnahmestellen, welche bspw. in Gebäuden auch auf verschiedenen Ebenen liegen können. In diesem Fall ist bevorzugt, dass die Lokalisationseinrichtung auch zur Darstellung solcher Wasserentnahmestellen insbesondere auch auf verschiedenen Ebenen angepasst bzw. geeignet ist. Alternativ oder kombinativ können Informationswiedergabemittel zur optischen und/oder akustischen Wiedergabe von Lokalisationssignalen vorhanden sein. Dies erweist sich als zweckmäßig insbesondere in Verbindung damit, dass die mobile Lokalisationseinrichtung Datenverarbeitungsmittel aufweist, die zur Ermittlung der Entfernung und/oder der Wegbeschreibung von der eigenen momentanen Position der mobilen Lokalisationseinrichtung zu den jeweiligen Positionen bzw. Koordinaten verschiedener Löschmittelentnahmestellen geeignet sind. Beispielsweise kann mittels der Häufigkeit eines Licht- oder Tonsignals, in der dieses je Zeiteinheit auftritt, die sich ändernde Entfernung von der Löschmittelentnahmestelle angezeigt werden. Alternativ oder kombinativ zu bspw. Licht- oder Tonsignalen kann die von den Datenverarbeitungsmitteln ermittelte Entfernung und/oder Wegbeschreibung von der Position der Lokalisationseinrichtung zu den Positionen der Löschmittelentnahmestellen, insbesondere kartografisch, mittels eines Displays der Lokalisationseinrichtung dargestellt werden. Damit Einsatzfahrzeuge schneller zu der jeweiligen Einsatzstelle navigiert werden können, besteht die Möglichkeit, dass die Einsatzkräfte mittels der Lokalisationseinrichtung, die in diesem Fall auch als Navigationsgerät dienen kann, in direktem Kontakt mit der Einsatzleitzentrale stehen. Es besteht die Möglichkeit, dass die Einsatzkräfte bei Fahrtbeginne von der Einsatzleitzentrale die aktuellen Einsatzkoordinaten ebenfalls per Funktechnologie direkt auf die Lokalisationseinrichtung gesendet bekommen, so dass die bislang manuelle Eingabe im Fahrzeug entfällt. Danach kann automatisch die Routenberechnung folgen, womit auch das schnelle Ansteuern bspw. einer Straße im richtigen Ort (auch bei gleichnamigen Straßen in unterschiedlichen Orten) gewährleistet wird. Am Einsatzort können bspw. mittels eines Displays der Lokalisationseinrichtung die aktuelle eigene Position der Lokalisationseinrichtung und die jeweiligen Positionen von einer oder mehreren Löschmittelentnahmestellen angezeigt werden sowie insbesondere (ggf. kartografisch) die von den Datenverarbeitungsmitteln der mobilen Lokalisationseinrichtung ermittelten Wegbeschreibungen zu einer oder mehreren Löschmittelentnahmestellen. Erfindungsgemäß ist vorgesehen, dass die mobile Lokalisationseinrichtung Datenverarbeitungsmittel aufweist, die, vorzugsweise auf der Grundlage vorgegebener (bspw. einprogrammierter) Kriterien, zur Ermittlung bzw. Auswahl einer bevorzugten Löschmittelentnahmestelle unter Berücksichtigung der jeweiligen Entfernungen und/oder der jeweiligen Wegbeschreibungen und/oder der jeweiligen Art und/oder der jeweiligen verfügbaren Leistung/ bzw. Kapazität mehrerer Löschmittelentnahmestellen geeignet sind. Denkbar wäre hier bspw. eine Situation, bei welcher, bezogen auf die momentane Position der mobilen Lokalisationseinrichtung, die nächstgelegene Löschmittelentnahmestelle ein Hydrant mit geringer Löschleistung ist und sich in nur geringfügig größerem Abstand eine ebenfalls mit einem Lokalisationsmodul versehene Wasserentnahmestelle eines Flusses befindet. Die Lokalisationseinrichtung kann hier, ggf. auch abhängig von einer gewählten Voreinstellung, die unterschiedliche Löschleistung der beiden Wasserentnahmestellen stärker als ihren geringfügig unterschiedlichen Abstand gewichten und mittels ihrer Informationswiedergabemittel den Fluss als bevorzugte Wasserentnahmestelle kennzeichnen. Vergleichbar bestünde bspw. auch die Möglichkeit, dass die mobile Lokalisationseinrichtung eine bevorzugte Auswahl zwischen mehreren künstlichen Löschmittelentnahmestellen bzw. -einrichtungen wie bspw. Hydranten, trifft. Bevorzugt wird für die Dokumentation und Kontrolle von Pflege, Wartung, Reparatur und Benutzung jede Entnahmestelle zudem mit der schon angesprochenen Kennnummer versehen. Dies erleichtert auch in der Einsatzzentrale die computergestützte Erstellung bzw. Auswertung von Einsatz- oder Reparaturstatistiken, bspw. für spezielle Einsatzgebiete.

Für die Funkortung können die mobile Lokalisationseinrichtung und / oder die Lokalisationsmodule bevorzugt jeweils eine Antenne aufweisen. Bei einem ersten bevorzugten Ausführungsbeispiel des Lokalisationsmoduls ist vorgesehen, dass die Funkwellenaufnahmemittel als Funkempfänger ausgebildet sind, dass die Signalinhaltbereitstellungsmittel Datenverarbeitungsmittel (bspw. einen Rechner) und / oder einen Datenspeicher aufweisen und dass die Funkwellenabgabemittel als Funksender ausgebildet sind. Dabei kann das von dem Funkempfänger aufgenommene sog. erste Funksignal (Anrufsignal) in dem Rechner verarbeitet werden und der Rechner, ggf. auch abhängig vom Inhalt des ersten Funksignals, mittels seines Datenspeichers den Funksender zur Absendung des sog. zweiten Funksignals veranlassen, das auf diese Löschmittelentnahmestelle spezifisch bezogene Informationen beinhaltet. In einem alternativen Ausführungsbeispiel des Lokalisationsmoduls können die Funkwellenaufnahmemittel, ggf. Signalinhaltbereitstellungsmittel und die Funkwellenabgabemittel des Lokalisationsmoduls als Funkreflektionsmodul ausgeführt sein, d.h. es kann das einem Fachmann bekannte Prinzip der Funkwellenreflektion zur Anwendung kommen. Dabei sendet die mobile Lokalisationseinrichtung zunächst das sog. erste Funksignal an bspw. eine Mehrzahl von Hydranten, die jeweils per Funkwellenreflektion antworten. In Abweichung von dem ersten Ausführungsbeispiel, bei dem das erste Funksignal aktiv mit dem zweiten Funksignal beantwortet wird, erfolgt bei der Funkwellenreflektion eine passive Beantwortung. Während bei dem ersten Ausführungsbeispiel die Möglichkeit besteht, dass das sog. erste Funksignal bspw. erst eine Stromversorgung (bspw. Batterie) des Lokalisationsmoduls freischalten muss, kann bei dem zweiten Ausführungsbeispiel (Funkwellenreflektion) je nach Ausgestaltung ggf. sogar ganz auf eine Energieversorgung des Lokalisationsmoduls verzichtet werden. Dabei bestehen zwei Möglichkeiten zur Nutzung. Einerseits kann das sog. erste Funksignal von dem Lokalisationsmodul im Wesentlichen unverändert als sog. zweites Funksignal reflektiert werden (d.h. in diesem Fall veranlassen die Signalinhaltbereitstellungsmittel eine praktisch unveränderte Übernahme des ersten Funksignals als zweites Funksignal). Die mobile Lokalisationseinrichtung kann anhand des Zeitintervalls vom Absenden des ersten Funksignals bis zum Empfang des zweiten Funksignals, d.h. anhand der Laufzeitbestimmung, den Abstand zwischen ihrer eigenen Position und der Position der Löschmittelentnahmestelle ermitteln. Alternativ kann das erste Funksignal beim Auftreffen und / oder Verlassen seiner Funkwellen an dem Lokalisationsmodul moduliert bzw. verändert werden und dadurch das sog. zweite Funksignal erzeugt werden, welches an die mobile Lokalisationseinrichtung passiv zurückgesandt wird. Das modulierte zweite Funksignal kann bspw. Informationen über die Position bzw. Koordinaten, über die verfügbare Löschleistung bzw. -kapazität, über die Art usw. der Löschmittelentnahmestelle beinhalten. Bei dem ersten und zweiten Ausführungsbeispiel besteht die Möglichkeit, dass das erste Funksignal von einem in die mobile Lokalisationseinrichtung eingebauten Funksender, vorzugsweise erst nach Erreichen des Einsatzortes, ausgesendet wird. Alternativ oder kombinativ können ein oder mehrere Funksender zur Aussendung der Funksignale vom ersten Typ ("erste Funksignale") unabhängig von der mobilen Lokalisationseinrichtung vorhanden sein. Bspw. kann sich ein solcher Funksender auch auf einem Einsatz- bzw. Löschfahrzeug oder in einem Gebäude (bspw. Leitzentrale) befinden.

Es besteht die Möglichkeit, dass das erste vorbestimmte Funksignal das Lokalisationsmodul von einem Ruhe- oder Stand-by-Modus, vorzugsweise für eine vorbestimmte begrenzte Zeitdauer, in einen Betriebszustand umschaltet, während welchem das zweite Funksignal abgegeben wird. Innerhalb des Aktivierungszeitraumes kann das zweite Funksignal einmalig oder häufiger, bspw. kontinuierlich, quasikontinuierlich oder in vergleichsweise größeren Zeitabständen abgegeben werden. Ein Lokalisationsmodul kann in der Weise ausgeführt, bspw. programmiert, sein, dass es nach diesem Zeitraum automatisch wieder in den Schlafmodus übergeht.

Konstruktiv besteht die Möglichkeit, dass das Lokalisationsmodul in das Gehäuse eines Hydranten, bspw. eines Unterflurhydranten, integriert ist. Beispielsweise kann das Lokalisationsmodul vollständig oder teilweise in einen gegen Korrosion geschützten Hohlkörper, bspw. in eine dicke Hohlschraube oder dergleichen, integriert und dieser Hohlkörper in oder an bspw. einem Hydranten befestigt sein. Es besteht die Möglichkeit, auch die Antenne und Energiequelle des Lokalisationsmoduls mit in den Hohlkörper zu integrieren. Je nach Ausführungsform können Sender und Empfänger oder ein Modul nach dem Reflektorprinzip mit in den Hohlkörper integriert werden.

Das Lokalisationsmodul ist, unabhängig von einer wahlweisen Ausgestaltung als Sender- / Empfängermodul oder als Reflektormodul, bei Zuordnung zu einem Hydranten vorzugsweise in dessen Hydranten-Korpus montiert, im Fall einer andersartigen Wasserentnahmestelle in der Nähe. Das Funkreflektionsmodul (bzw. der Funkreflektor) kann sich so lange im Stand-by-Modus befinden, bis es von einem externen Funksignal getroffen wird. In diesem Fall aktiviert sich das Modul selbst und sendet die Hydrantendaten mit einem, vorzugsweise verstärkten, Echo an das Sende- bzw. Anzeigegerät zurück. Dieses bzw. die mobile Lokalisationseinrichtung ist in der Lage, aus den empfangenen Daten schnell die exakte Position der Wasserentnahmestelle zu berechnen und mittels visueller Darstellung auf dem Display und ggf. mit akustischer Signalgebung die Position anzuzeigen.

Das Lokalisationsmodul kann Auswerte- bzw. Signalverarbeitungsmittel aufweisen, die daran angepasst sind, das erste vorbestimmte Funksignal auf das Vorhandensein von vorbestimmter, vorzugsweise einem oder mehreren bestimmten Lokalisationsmodulen zur Unterscheidung von anderen Lokalisationsmodulen zugeordneter, Information auszuwerten, so dass die Auswertemittel das Lokalisationsmodul nur bei Vorhandensein dieser zu ihm passenden Information vom Stand-by- bzw. Schlaf-Zustand ausgehend in den Betriebszustand überführen. Je nach örtlichen Gegebenheiten kann das erfindungsgemäße System als Löschmittelentnahmestellen vorzugsweise eine Anzahl von Hydranten und / oder zumindest einen Löschteich und / oder zumindest ein fließendes Gewässer, bspw. ein Bach oder Fluss, umfassen.

Eine zweckmäßige Weiterbildung wird darin gesehen, dass das System zumindest einen Löschmittelentnahmestellendatenspeicher umfasst, welcher für mehrere Löschmittelentnahmestellen diesen jeweils spezifisch zugeordnete Löschmittelentnahmestellendaten, vorzugsweise betreffend die jeweiligen Koordinaten und / oder die Art und / oder die momentan verfügbare Entnahmeleistung bzw. -kapazität und / oder eine Kennung der jeweiligen Löschmittelentnahmestellen, beinhaltet, wobei der Löschmittelentnahmestellendatenspeicher sich in der mobilen Lokalisationseinrichtung befinden kann oder davon getrennt ausgeführt und mit einem Funksender verbunden sein kann zur Funkübertragung von Löschmittelentnahmestellendaten an die mobile Lokalisationseinrichtung. In diesem Fall kann ausreichend sein, dass die Lokalisationsmodule der Löschmittelentnahmestellen nur ihre spezifische Kennung mittels des zweiten Funksignals an die mobile Lokalisationseinrichtung übertragen. Allerdings bietet die Möglichkeit, auch bspw. die Löschleistung von den jeweiligen Löschmittelentnahmestellen bzw. von deren Lokalisationsmodul per zweitem Funksignal zu übertragen, den Vorteil, dass dann bei Entnahmestellen, deren Löschleistung sich zeitlich ändern kann (bspw. das Speichervolumen in einem Tank) auch von den Lokalisationsmodulen mittels daran angeschlossener geeigneter Sensoren das jeweils aktuelle Löschvermögen abgefragt und dann nach Aktivierung per Funksignal übertragen werden kann. Es besteht auch die Möglichkeit, dass mittels der mobilen Lokalisationseinrichtung von unterwegs per Funk Löschmittelentnahmestellendaten von dem Löschmittelentnahmestellendatenspeicher abgerufen werden, vorzugsweise gezielt für die Umgebung eines bestimmten Einsatzortes. Es besteht auch die Möglichkeit, dass der Löschmittelentnahmestellendatenspeicher mit einem umfangreichen Verzeichnis aller europäischen Gefahrstoffwarntafeln ausgestattet ist. Ein entsprechender großer Datenspeicher kann in die Lokalisationseinrichtung integriert sein und / oder davon räumlich getrennt (bspw. in einer Einsatzleitzentrale) vorhanden sein. Bevorzugt ist dabei, dass der Datenspeicher, insbesondere die mobile Lokalisationseinrichtung, ergänzend zu jedem Gefahrstoff mindestens einen passenden Löschmittelvorschlag unterbreiten kann. Wenn sich der Löschmittelentnahmestellendatenspeicher räumlich getrennt von der mobilen Lokalisationseinrichtung befindet, besteht die Möglichkeit, dass ein Bediener der Lokalisationseinrichtung darin, bspw. mittels einer Tastatur, eine Bezeichnung für eine an einem Einsatzort vorgefundene standardisierte Gefahrstoffwarntafel eingibt und mittels Funk an den räumlich entfernten Löschmittelentnahmestellendatenspeicher übermittelt, um von dort per Funk einen Löschmittelvorschlag zu erhalten. Wenn sich der Datenspeicher innerhalb der Lokalisationseinrichtung befindet, kann nach Eingabe der Bezeichnung der Löschmittelvorschlag unmittelbar von dort erhalten werden. Außerdem sollten mögliche Gefahren und / oder gefährliche Güter und / oder Orte im Zusammenhang mit der topografischen Karte der Region sowohl visuell als auch akustisch dargestellt werden können. Das erfindungsgemäße System ist nicht auf bestimmte Frequenzen oder Netzbereiche beschränkt. Vielmehr ist bevorzugt, dass das System sämtliche Frequenzen /Netzbereiche, wie vorzugsweise GSM/ISM und dergleichen nutzen kann. Gemäß einem weiteren Aspekt besteht zur bevorzugten Weiterbildung die Möglichkeit, dass der Hydrant eine Heizeinrichtung aufweist, die bei der Auswahl des Hydranten insbesondere mittels der mobilen Lokalisationseinrichtung mittels eines Funksenders ferngesteuert aktivierbar ist. Dies ermöglicht weiteren Zeitgewinn, da manuelles Enteisen am Einsatzort überflüssig wird.

Die Erfindung betrifft zusätzlich ein Verfahren zur Lokalisation von Löschmittelentnahmestellen, vorzugsweise zur Lokalisation von Löschmittelentnahmeeinrichtung wie bspw. von Hydranten für die Wasserentnahme, und schlägt zur vorteilhaften Ausführung vor, dass ein System zur Lokalisation von Löschmittelentnahmestellen gemäß einem oder mehreren der Ansprüche 1 bis 14 verwendet wird.

Die Erfindung wird nachfolgend mit Bezug auf die beigefügten Figuren, welche das erfindungsgemäße System und Verfahren gemäß bevorzugten Ausführungsbeispielen zeigen, weiter beschrieben. Darin zeigt:
- Fig. 1: schematisch vereinfacht Bestandteile des erfindungsgemäßen Systems gemäß einem bevorzugten Ausführungsbeispiel und
- Fig. 2: schematisch vereinfacht ein weiteres Anwendungsbeispiel des erfindungsgemäßen Verfahrens.

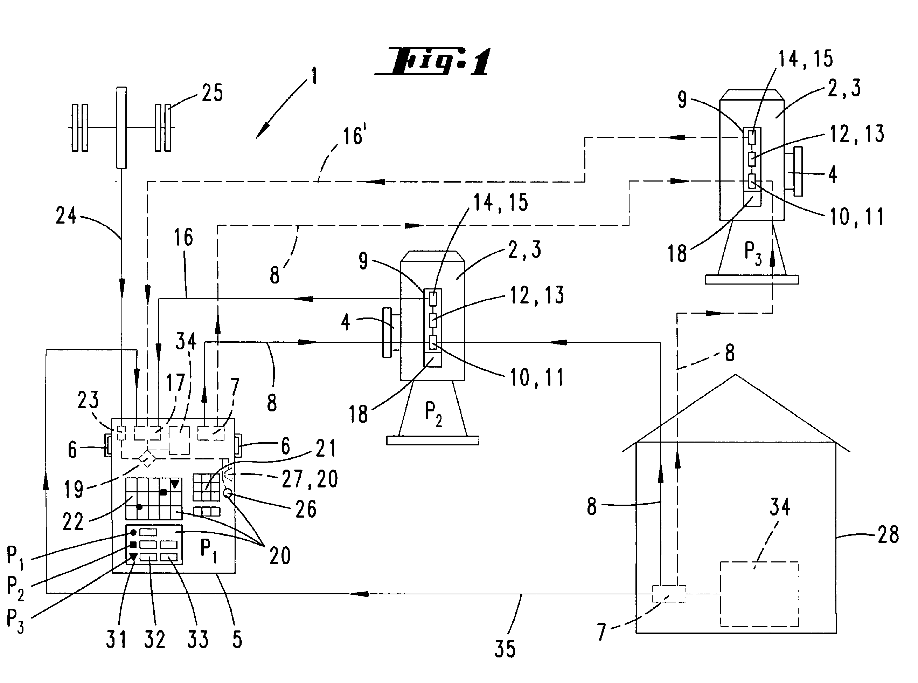

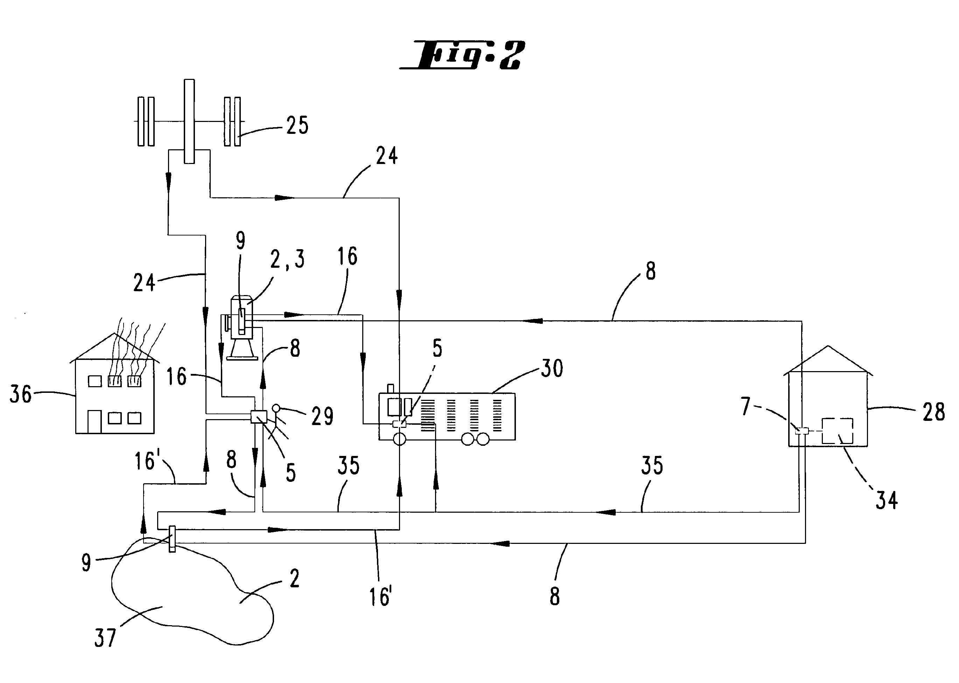

Fig. 1 zeigt das erfindungsgemäße System 1 zur Lokalisation von verschiedenen, hier beispielhaft für die Darstellung gewählten Löschmittelentnahmestellen 2 gemäß einem ersten bevorzugten Ausführungsbeispiel, bzw. zeigt bevorzugte Komponenten eines erfindungsgemäßen Systems 1. Es versteht sich, dass sich das dargestellte System 1 gerade im Hinblick auf die in der Beschreibung erläuterte Erweiterbarkeit durch weitere Komponenten, insbesondere auch durch zusätzliche und / oder andere Löschmittelentnahmestellen ergänzen ließe. Gleiches gilt auch für Fig. 2. Ebenso sind in beiden Figuren die Größenverhältnisse und Abstände zwischen den Systemkomponenten nicht größen- bzw. maßstabgerecht wiedergegeben. Dabei zeigt Fig.1 im Vergleich zu Fig. 2 mehr Einzelheiten des Systems, während bei der Darstellung von Fig. 2 die Gesamtsituation im Vordergrund steht.

Bei den beiden in Fig. 1 gezeigten Löschmittelentnahmestellen 2 handelt es sich jeweils um einen Hydranten 3, der mit einem üblichen Anschluss 4 für die Wasserentnahme ausgestattet ist. Zu dem System zählt eine mobile Lokalisationseinrichtung 5, welche mittels Griffen 6 von einer Person tragbar ist. Die Lokalisationseinrichtung 5 besitzt in ihrem Inneren, daher gestrichelt angedeutet, einen Funksender 7. Dieser dient zum Aussenden eines sog. ersten, in seinem Informationsgehalt vorbestimmten Funksignals 8 in verschiedene Richtungen, wobei das Funksignal 8 (wie auch weitere in mehrere Richtungen ausgesandte Funksignale) vereinfachend nur als Funkverbindungs-Linie zu einem Empfänger dargestellt sind. In dem gezeigten Beispiel erreicht das erste Funksignal 8 ausgehend von der mobilen bzw. veränderlichen momentanen ersten Position P₁ der mobilen Lokalisationseinrichtung 5 die beiden Hydranten 3, die sich in unterschiedlichen Abständen von P₁ an den jeweils ortsfesten Positionen P₂ und P₃ befinden. Das sog. erste Funksignal 8 trifft dort an einem jeweiligen Lokalisationsmodul 9, das fest mit dem Hydranten 3 verbunden ist, auf ein Funkwellenaufnahmemittel 10, wobei es sich in dem Beispiel um einen Funkempfänger 11 handelt. Die Funkwellenaufnahmemittel 10 stehen in Verbindung mit Signalinhaltbereitstellungsmitteln 12, bei denen es sich in dem Beispiel um eine elektronische Schaltung 13 mit einem Speicher handelt. Diese bewirkt, dass damit verbundene Funkwellenabgabemittel 14, bei denen es sich um einen Funksender 15 handelt, ein sog. zweites Funksignal 16 bzw. 16' (je nach Hydrant 3) aussenden, das wiederum von einem Funkempfänger 17 in der mobilen Lokalisationseinrichtung 5 empfangen wird. Nur zur leichteren Übersicht sind in Fig.1 die Funksignale 8, 16' des Hydranten bei P₃ gestrichelt dargestellt. Die beiden sog. zweiten Funksignale 16,16', d.h. die beiden Antwortsignale, unterscheiden sich inhaltlich von dem für beide Hydranten 3 übereinstimmenden sog. ersten Funksignal 8, d.h. Anruf- bzw. Aktivierungsfunksignal. Die zweiten Funksignale 16, 16' enthalten in dem gewählten Beispiel Informationen über die jeweiligen Positionen P₂ und P₃ (bzw. die zugehörigen Koordinaten), über die Art der Wasserentnahmestelle und über deren Wasserkapazität. Da die beiden Hydranten in dem Beispiel baugleich sind, unterscheiden sich die beiden von ihnen ausgesandten zweiten Funksignale 16 bzw. 16' nur hinsichtlich der damit inhaltlich übertragenen Koordinaten (Standorte). Um dies symbolisch anzudeuten, wurden unterschiedliche Bezugszeichen 16 bzw. 16' gewählt. Schematisch ist angedeutet, dass jedes Lokalisationsmodul 9 eine eigene Energieversorgungseinrichtung 18 aufweist. Der Funkempfänger 17 empfängt beide sog. zweiten Funksignale 16,16' bzw. Antwortsignale, die auch zu ihrer Unterscheidung weitere Unterschiede aufweisen können, und leitet diese an Signalverarbeitungsmittel 19 und Informationswiedergabemittel 20 der mobilen Lokalisationseinrichtung 5 weiter. Die Signalverarbeitungsmittel ermöglichen die voneinander gesonderte Auswertung der zweiten Funksignale 16, 16' bzgl. der darin jeweils enthaltenen Informationen. Die Lokalisationseinrichtung 5 besitzt Bedienmittel 21 mit Tastatur, mittels der sich für die Lokalisation und Auswahl von Löschmittelentnahmestellen 2 gewünschte Betriebsparameter einstellen lassen. Die Informationswiedergabemittel 20 beinhalten ein kartografisches Anzeigemittel 22 bzw. multifunktionales Display, auf welchem sich in einem eingeblendeten Land- oder Straßenkartenausschnitt die von den Signalverarbeitungsmitteln bestimmten Positionen P₁, P₂ und P₃ gemeinsam anzeigen lassen. Die für die Bestimmung der eigenen Position P₁ benötigte Information wird von einem in die mobile Lokalisationseinrichtung 5 integrierten Funkempfänger 23, welcher GPS-Signale 24 von mehreren GPS-Satelliten 25 (von welchen in Fig. 1 nur ein Satellit 25 gezeigt ist) empfängt und ebenfalls mit den Signalverarbeitungsmitteln 19 verbunden ist, bereit gestellt. Die Bestimmung der eigenen Position P₁ kann alternativ oder kombinativ zu der beschriebenen GPS-Ortung mittels Funkzellen-Ortung durchgeführt werden. In dem Beispiel befindet sich die Position P₁ an einem Einsatzort, bspw. in der Nähe von einem brennenden Haus oder Gegenstand. Anhand der Positionsanzeige auf dem Bildschirm kann der Bediener, der die mobile Lokalisationseinrichtung 5 trägt, übersichtlich erkennen, dass es zwei gleichartige, jedoch in unterschiedlichem Abstand von dem Einsatzort P₁ befindliche Hydranten 3 gibt. Der Bediener kann sich anhand dessen für den an Position P₂ befindlichen näheren Hydrant 3 entscheiden (oder diese Entscheidung in einem wählbaren Automatik-Betrieb auch den Signalverarbeitungsmitteln 19 überlassen). Wird der Hydrant 3 an Position P₂ bspw. mittels der Bedienmittel 21 ausgewählt (bspw. mit einem Cursor markiert), kann die Entfernung zwischen der veränderlichen Position P₁ und der festen Position P₂, die sich bei Bewegung des Bedieners ändert, durch entsprechend veränderliche Signale eines Blinklichts 26 oder eines Lautsprechers 27 angezeigt werden. Zur Erzeugung dieser Licht- bzw. Tonsignale können wiederum die Datenverarbeitungsmittel 19 dienen.

Die in Fig. 1 gezeigte mobile Lokalisationseinrichtung 5 kann je nach Bedarf von einer Bedienperson getragen oder bspw. lose oder fest eingebaut in einem Fahrzeug (in Fig. 1 nicht mit dargestellt) mitgeführt werden und ermöglicht es wie beschrieben, die Lokalisationsmodule 9 der Wasserentnahmestellen 2 vorzugsweise nach Eintreffen am Einsatzort per Funktechnologie zu aktivieren und anzupeilen. Mittels dieser Anpeilung per Anzeigegerät können infolge dessen dann durch die vom jeweiligen Lokalisationsmodul 9 der Wasserentnahmestelle 2 ausgesendeten Kennungsdaten die Art und Kapazität sowie die Koordinaten der Wasserentnahmestelle (Hydrant 3) bestimmt werden. Anhand der von den Hydranten 3 empfangenen, zueinander unterschiedlichen Antwortsignale lässt sich eine für den Einsatz geeignete Wasserentnahmestelle leicht und exakt lokalisieren. In Fig. 1 ist mit dem Bezugszeichen 28 das Gebäude einer Feuerwehr-Leitzentrale bezeichnet. Darin befindet sich (schematisch angedeutet) ein weiterer Funksender, der auch mit dem Bezugszeichen 7 bezeichnet ist. Auch mittels diesem können sog. erste Funksignale 8 zur Aktivierung der Lokalisationsmodule 9 von Löschmittelentnahmestellen 2 ausgesandt werden. Die Funksignale 8 können bei Bedarf auch eine Kennung enthalten, mittels der bspw. nur bestimmte Typen oder nur in einem gewünschten örtlichen Bereich vorhandene Wasserentnahmestellen 2 aktiviert werden. Mittels des Funksenders 7 der Leitzentrale können Lokalisationsmodule 9 nicht nur bei einem Einsatz, sondern bspw. auch bei einer Übung per Funk aus ihrem ansonsten bestehenden Schlaf-Modus aktiviert werden. In dem Beispiel umfassen die Informationswiedergabelmittel 20 der Lokalisationseinrichtung 5 unterhalb des kartografischen Displays 22 ein Anzeigefenster 31 mit Anzeigefeldern 32 für die jeweiligen GPS-Koordinaten der Positionen P₁, P₂ und P₃ und mit Anzeigefeldern 33 für die Anzeige der jeweiligen Art und Leistung der Löschmittelentnahmestelle.

In dem in Fig. 1 gezeigten Ausführungsbeispiel besitzt das System 1 einen Löschmittelentnahmestellendatenspeicher 34, der exemplarisch in dem Gebäude 28 der Leitzentrale untergebracht ist. Dieser beinhaltet Daten einer Vielzahl von Löschmittelentnahmestellen. Wie schematisch angedeutet, ist dieser Speicher mit dem stationären Funksender 7 verbunden. Der Funksender 7 kann ein Funksignal 35 an den Funkempfänger 17 der mobilen Lokalisationseinrichtung 5 übermitteln, um Löschmittelentnahmestellendaten (bspw. zu Art und Leistung), die sich auf verschiedene Löschmittelentnahmestellen beziehen können, an die mobile Lokalisationseinrichtung 5 zu übertragen. Alternativ oder kombinativ zu dem in der Leitzentrale untergebrachten Löschmittelentnahmestellendatenspeicher 34 kann die mobile Lokalisationseinrichtung 5 selbst einen derartigen Löschmittelentnahmestellendatenspeicher 34 aufweisen, welcher bspw. direkt mit den Datenverarbeitungsmitteln 19 verbunden ist. Dies ist in Fig. 1 ebenfalls schematisch angedeutet.

Fig. 2 zeigt schematisch vereinfacht ein weiteres Ausführungsbeispiel des erfindungsgemäßen Systems 1 bzw. ein weiteres bevorzugtes Verfahrensbeispiel. Darin sind zur besseren Übersicht der Fig. 1 entsprechende Komponenten und Merkmale mit gleichen Bezugszeichen versehen. Zu Fig.1 ergänzend ist eine Bedienperson 29, welche eine mobile Lokalisationseinrichtung 5 aus einem Fahrzeug 30 einer Feuerwehr zu einem Einsatzort 36 trägt, und als weitere Löschmittelentnahmestelle ein Löschteich 37 dargestellt. Wiederum sind mit Pfeilen vereinfacht die verschiedenen erläuterten Funksignale angedeutet. Mittels des aus dem Gebäude 28 der Leitzentrale ausgesendeten Funksignals 35 können zusätzlich bspw. Einsatzortpositionsdaten an die mobile Lokalisationseinrichtung übertragen werden. Eine weitere baugleiche Lokalisationseinrichtung 5 ist in dem Fahrzeug 30 verblieben. In dem Gebäude 28 kann auch eine weitere Lokalisationseinrichtung 5 bau- und funktionsgleich, jedoch für den stationären Einsatz vorhanden sein, mittels der auch die von den Lokalisationsmodulen 9 ausgesendeten sog. zweiten Funksignale 16, 16' empfangen werden können. Im Übrigen ist der Aufbau und die Funktions- bzw. Verfahrensweise wie zu Fig.1 beschrieben.

## Patentansprüche

1. System zur Lokalisation von Löschmittelentnahmestellen, wobei das System (1) zumindest einen zum Senden von zumindest einem ersten Funksignal (8) geeigneten Funksender (7) aufweist, sowie ein oder mehrere Lokalisationsmodule (9), wobei an einer oder an mehreren Löschmittelentnahmestellen (2) jeweils ein Lokalisationsmodul (9) angebracht ist oder anbringbar ist, wobei das Lokalisationsmodul (9) miteinander gekoppelte Funkwellenaufnahmemittel (10) und Funkwellenabgabemittel (14) aufweist, wobei die Aufnahme des vorbestimmten ersten Funksignals (8) mit tels der Funkwellenaufnahmemittel (10) die automatische Abgabe von zumindest einem zweiten Funksignal (16, 16') mittels der Funkwellenabgabemittel (14) bewirkt, **dadurch gekennzeichnet, dass** das System zumindest eine mobile Lokalisationseinrichtung (5) umfasst, welche zumindest einen Funkempfänger (17) zum Empfang des zumindest zweiten Funksignals (16, 16') und damit verbundene Datenverarbeitungsmittel (19) und Informationswiedergabemittel (20) aufweist, dass die mobile Lokalisationseinrichtung (5) Datenverarbeitungsmittel (19) aufweist, die zur Ermittlung der Entfernung und / oder der Wegbeschreibung von der eigenen momentanen Position (P₁) zu den jeweiligen Positionen (P₂, P₃) verschiedener Löschmittelentnahmestellen (2) geeignet sind und dass die mobile Lokalisationseinrichtung (5) Datenverarbeitungsmittel (19) aufweist, die zur Ermittlung einer bevorzugten Löschmittelentnahmestelle (2) unter Berücksichtigung der jeweiligen Entfernungen und / oder der jeweiligen Wegbeschreibungen und / oder der jeweiligen Art und / oder der jeweiligen verfügbaren Leistung mehrerer Löschmittelentnahmestellen (2) geeignet sind.

2. System nach Anspruch 1, **dadurch gekennzeichnet, dass** es sich um ein System zur Lokalisation von Löschmittelentnahmeeinrichtungen, wie bspw. von Hydranten (3) für die Wasserentnahme, handelt und insbesondere dass das System eine oder mehrere Löschmittelentnahmeeinrichtungen, wie bspw. Hydranten (3), aufweist.

3. System nach einem oder mehreren der vorangehenden Ansprüche, **dadurch gekennzeichnet, dass** das System eine oder mehrere Löschmittelentnahmestellen (2) aufweist.

4. System nach einem oder mehreren der vorangehenden Ansprüche, **dadurch gekennzeichnet, dass** an einem oder mehreren Hydranten (3) jeweils ein Lokalisationsmodul (9) angebracht ist.

5. System nach einem oder mehreren der vorangehenden Ansprüche, **dadurch gekennzeichnet, dass** das Lokalisationsmodul (9) mit den Funkwellenaufnahmemitteln (10) und den Funkwellenabgabemittel (14) gekoppelte Signalinhaltbereitstellungsmittel (12) aufweist und dass das zweite Funksignal (16, 16') bezüglich seines Signalinhalts von den Signalinhaltbereitstellungsmitteln (12) bereitgestellt wird und insbesondere dass von einem bestimmten Lokalisationsmodul (9) abgegebene, insbesondere ausgesendete, Funksignale (16, 16') diesem bestimmten Lokalisationsmodul (9) spezifisch zugeordnete Information beinhalten, insbesondere Information betreffend die Lage bzw. die Koordinaten der Löschmittelentnahmestelle (2) und / oder die Art der Löschmittelentnahmestelle (2) und / oder die verfügbare Leistung der Löschmittelentnahmestelle (2) und / oder eine Kennbezeichnung der Löschmittelentnahmestelle (2).

6. System nach einem oder mehreren der vorangehenden Ansprüche, **dadurch gekennzeichnet, dass** die mobile Lokalisationseinrichtung (5) fest oder lösbar in einem Fahrzeug (30) angeordnet ist und insbesondere von einer Person (29) tragbar und mit eigener Energieversorgungseinrichtung ausgeführt ist.

7. System nach einem oder mehreren der vorangehenden Ansprüche, **dadurch gekennzeichnet, dass** zumindest ein Funksender (7) zum Aussenden des vorbestimmten ersten Funksignals (8) an der mobilen Lokalisationseinrichtung (5) und / oder in einem Fahrzeug (30) fest oder lose und /oder in einem Gebäude (28) fest oder lose vorgesehen ist.

8. System nach einem oder mehreren der vorangehenden Ansprüche, **dadurch gekennzeichnet, dass** die mobile Lokalisationseinrichtung (5) einen zum Empfang von GPS-Signalen (24) geeigneten Funkempfänger (23) aufweist und Positionsbestimmungsmittel zur Bestimmung der eigenen Position (P₁) mittels der GPS-Signale (24).

9. System nach einem oder mehreren der vorangehenden Ansprüche, **dadurch gekennzeichnet, dass** die mobile Lokalisationseinrichtung (5) Informationswiedergabemittel (20) aufweist zur optischen und / oder akustischen Wiedergabe von Lokalisationssignalen, wobei insbesondere vorgesehen ist, dass die mobile Lokalisationseinrichtung (5) Anzeigemittel, insbesondere kartografische Anzeigemittel (22) oder ein multifunktionales Display, aufweist zur Anzeige der eigenen Position (P₁) und der jeweiligen Position (P_{2,} P₃) von einer oder mehreren Löschmittelentnahmestellen (2).

10. System nach einem oder mehreren der vorangehenden Ansprüche, **dadurch gekennzeichnet, dass** die Funkwellenaufnahmemittel (10) einen Funkempfänger (11) aufweisen, dass die Signalinhaltbereitstellungsmittel (12) Datenverarbeitungsmittel (13) und / oder einen Datenspeicher, insbesondere einen Rechner, umfassen und dass die Funkwellenabgabemittel (14) einen Funksender (15) aufweisen oder dass die Funkwellenaufnahmemittel (10), die Signalinhaltbereitstellungsmittel (12) und die Funkwellenabgabemittel (14) des Lokalisationsmoduls (9) als Funkreflektionsmodul ausgeführt sind.

11. System nach einem oder mehreren der vorangehenden Ansprüche, **dadurch gekennzeichnet, dass** das vorbestimmte erste Funksignal (8) das Lokalisationsmodul (9) von einem Ruhe- oder Stand-by-Modus, insbesondere für eine vorbestimmte Zeitdauer, in einen Betriebszustand umschaltet, während welchem Betriebszustand zumindest das zweite Funksignal (16, 16') kontinuierlich, quasikontinuierlich oder in größeren Zeitabständen abgegeben wird.

12. System nach einem oder mehreren der vorangehenden Ansprüche, **dadurch gekennzeichnet, dass** das Lokalisationsmodul (9) Auswertemittel aufweist, die daran angepasst sind, das vorbestimmte erste Funksignal (8) auf das Vorhandensein von vorbestimmter, insbesondere dem Lokalisationsmodul (9) zur Unterscheidung von anderen Lokalisationsmodulen (9) zugeordneter, Information auszuwerten, und dass die Auswertemittel das Lokalisationsmodul (9) nur bei Vorhandensein dieser Information vom Ruhe- oder Stand-by-Zustand ausgehend in den Betriebszustand überführen.

13. System nach einem oder mehreren der vorangehenden Ansprüche, **dadurch gekennzeichnet, dass** als Löschmittelentnahmestellen (2) eine Anzahl von Hydranten (3) und / oder zumindest ein Löschteich (35) und /oder zumindest ein fließendes Gewässer vorgesehen sind.

14. System nach einem oder mehreren der vorangehenden Ansprüche, **dadurch gekennzeichnet, dass** das System (1) zumindest einen Löschmittelentnahmestellendatenspeicher (34) umfasst, welcher für mehrere Löschmittelentnahmestellen (2) diesen jeweils spezifisch und / oder gruppenweise zugeordnete Löschmittelentnahmestellendaten, insbesondere betreffend die Koordinaten und / oder die Art und / oder die verfügbare Leistung und / oder eine Kennbezeichnung der jeweiligen Löschmittelentnahmestellen (2), beinhaltet, wobei der Löschmittelentnahmestellendatenspeicher (34) sich in der mobilen Lokalisationseinrichtung (5) befindet oder davon getrennt ausgeführt und mit einem Funksender (7) verbunden ist zur Funkübertragung von Löschmittelentnahmestellendaten an die mobile Lokalisationseinrichtung (5).

15. Verfahren zur Lokalisation von Löschmittelentnahmestellen (2), insbesondere zur Lokalisation von Löschmittelentnahmeeinrichtungen wie bspw. von Hydranten (3) für die Wasserentnahme, **dadurch gekennzeichnet, dass** ein System (1) zur Lokalisation von Löschmittelentnahmestellen gemäß einem oder mehreren der vorangehenden Ansprüche verwendet wird.

## Claims

1. System for localising extinguishing agent withdrawal sites, the system (1) comprising at least one radio transmitter (7), which is suitable for transmitting at least one first radio signal (8), and one or more localisation modules (9), a localisation module (9) being attached or being able to be attached to one or more extinguishing agent withdrawal sites (2), the localisation module (9) comprising radio wave receiving means (10) and radio wave output means (14) which are coupled with one another, the reception of the predetermined first radio signal (8) by means of the radio wave receiving means (10) causing the automatic output of at least one second radio signal (16, 16') by means of the radio wave output means (14), **characterised in that** the system comprises at least one movable localisation device (5), which comprises at least one radio receiver (17) for receiving the at least one second radio signal (16, 16') and data processing means (19) and information reproduction means (20) which are connected to said radio receiver, **in that** the movable localisation device (5) comprises data processing means (19) which are suitable for determining the distance and/or the direction from its current position (P₁) to the respective positions (P₂, P₃) of different extinguishing agent withdrawal sites (2), and **in that** the movable localisation device (5) comprises data processing means (19) which are suitable for determining a preferred extinguishing agent withdrawal site (2) by taking into account the respective distances and/or the respective directions and/or the respective type and/or the respective available power of a plurality of extinguishing agent withdrawal sites (2).

2. System according to claim 1, **characterised in that** it is a system for localising extinguishing agent withdrawal devices, such as hydrants (3) for water withdrawal, and in particular **in that** the system comprises one or more extinguishing agent withdrawal devices, such as hydrants (3).

3. System according to one or more of the preceding claims, **characterised in that** the system comprises one or more extinguishing agent withdrawal sites (2).

4. System according to one or more of the preceding claims, **characterised in that** a localisation module (9) is respectively attached to one or more hydrants (3).

5. System according to one or more of the preceding claims, **characterised in that** the localisation module (9) comprises signal content providing means (12) which are coupled with the radio wave receiving means (10) and radio wave output means (14), and **in that** the second radio signal (16, 16') is provided relative to its signal content from the signal content providing means (12), and in particular **in that** radio signals (16, 16') which are output, in particular transmitted, by a certain localisation module (9) contain information which is specifically assigned to said certain localisation module (9), in particular information relating to the position or the coordinates of the extinguishing agent withdrawal site (2) and/or the type of extinguishing agent withdrawal site (2) and/or the available power of the extinguishing agent withdrawal site (2) and/or an identifier of the extinguishing agent withdrawal site (2).

6. System according to one or more of the preceding claims, **characterised in that** the movable localisation device (5) is arranged in a fixed or removable manner in a vehicle (30) and in particular can be carried by one person (29) and is designed so as to comprise a separate energy supply device.

7. System according to one or more of the preceding claims, **characterised in that** at least one radio transmitter (7) for transmitting the predetermined first radio signal (8) is provided on the movable localisation device (5) and/or in a vehicle (30) in a fixed or removable manner and/or in a building (28) in a fixed or removable manner.

8. System according to one or more of the preceding claims, **characterised in that** the movable localisation device (5) comprises a radio receiver (23) which is suitable for receiving GPS signals (24) and position identification means for identifying its position (P₁) by means of the GPS signals (24).

9. System according to one or more of the preceding claims, **characterised in that** the movable localisation device (5) comprises information reproduction means (20) for optically and/or acoustically reproducing localisation signals, it being provided in particular that the movable localisation device (5) comprises display means, in particular cartographic display means (22) or a multi-functional display, for displaying its position (P₁) and the respective positions (P₂, P₃) of one or more extinguishing agent withdrawal sites (2).

10. System according to one or more of the preceding claims, **characterised in that** the radio wave receiving means (10) comprises a radio receiver (11), **in that** the signal content providing means (12) comprises data processing means (13) and/or a data storage means, in particular a computer, and **in that** the radio wave output means (14) comprise a radio transmitter (15) or **in that** the radio wave receiving means (10), the signal content providing means (12) and the radio wave output means (14) of the localisation module (9) being designed as a radio reflection module.

11. System according to one or more of the preceding claims, **characterised in that** the predetermined first radio signal (8) switches the localisation module (9) from an idle or stand-by state, in particular for a predetermined period of time, into an operating state, during which operating state at least the second radio signal (16, 16') is output continuously, semi-continuously or in larger time intervals.

12. System according to one or more of the preceding claims, **characterised in that** the localisation module (9) comprises evaluation means which are adapted to evaluate the predetermined first radio signal (8) for the presence of predetermined information which is in particular assigned to the localisation module (9) for differentiating from other localisation modules (9), and **in that** the evaluation means only transfer the localisation module (9) from the idle or stand-by state into the operating state if said information is present.

13. System according to one or more of the preceding claims, **characterised in that** a number of hydrants (3) and/or at least one extinguishing pool (35) and/or at least one flowing body of water are provided as extinguishing agent withdrawal sites (2).

14. System according to one or more of the preceding claims, **characterised in that** the system (1) comprises at least one extinguishing agent withdrawal site data storage means (34) which contains, for a plurality of extinguishing agent withdrawal sites (2), said extinguishing agent withdrawal site data which are respectively assigned specifically and/or in groups and relate in particular to the coordinates and/or the type and/or the available power and/or an identifier of the respective extinguishing agent withdrawal sites (2), the extinguishing agent withdrawal site data storage means (34) being located in the movable localisation device (5) or designed so as to be separate therefrom and being connected to a radio transmitter (7) for radio transmission of extinguishing agent withdrawal site data to the movable localisation device (5).

15. Method for localising extinguishing agent withdrawal sites (2), in particular for localising extinguishing agent withdrawal site devices, such as hydrants (3) for water withdrawal, **characterised in that** a system (1) for localising extinguishing agent withdrawal sites according to one or more of the preceding claims is used.

## Revendications

1. Système de localisation de points de prélèvement d'un agent d'extinction, où le système (1) présente au moins un émetteur radio (7) approprié pour émettre au moins un premier signal radio (8), ainsi qu'un ou plusieurs modules de localisation (9), où respectivement un module de localisation (9) est installé ou peut être installé au niveau d'un ou de plusieurs points de prélèvement d'un agent d'extinction (2), où le module de localisation (9) présente des moyens d'enregistrement d'ondes radio (10) couplés les uns aux autres et des moyens de délivrance d'ondes radio (14), où l'enregistrement du premier signal radio (8) prédéterminé par les moyens d'enregistrement d'ondes radio (10) déclenche la délivrance automatique d'au moins un deuxième signal radio (16, 16') par les moyens de délivrance d'ondes radio (14), **caractérisé en ce que** le système comprend au moins un dispositif de localisation (5) mobile, qui présente au moins un récepteur radio (17) servant à recevoir le deuxième signal radio (16, 16') au moins au nombre de un, ainsi que des moyens de traitement des donnés (19) associés et des moyens de restitution d'informations (20), **en ce que** le dispositif de localisation (5) mobile présente des moyens de traitement des données (19) qui sont appropriés pour déterminer la distance et/ou l'itinéraire entre la position propre actuelle (P₁) et les positions respectives (P₂, P₃) des divers points de prélèvement d'un agent d'extinction (2), et **en ce que** le dispositif de localisation (5) mobile présente des moyens de traitement des données (19) qui sont appropriés pour déterminer un point de prélèvement d'un agent d'extinction (2) préféré en tenant compte des distances respectives et/ou des itinéraires respectifs et/ou du type respectif et/ou de la puissance respectivement disponible de plusieurs points de prélèvement d'un agent d'extinction (2).

2. Système selon la revendication 1, **caractérisé en ce qu'**il s'agit d'un système servant à la localisation de dispositifs de prélèvement d'un agent d'extinction, tel que par exemple des prises d'eau (3) pour le prélèvement d'eau, et **en ce qu'**en particulier le système présente un ou plusieurs dispositifs de prélèvement d'un agent d'extinction, tel que par exemple des prises d'eau (3).

3. Système selon l'une quelconque ou plusieurs des revendications précédentes, **caractérisé en ce que** le système présente un ou plusieurs points de prélèvement d'un agent d'extinction (2).

4. Système selon l'une quelconque ou plusieurs des revendications précédentes, **caractérisé en ce que** respectivement un module de localisation (9) est installé au niveau d'une ou de plusieurs prises d'eau (3) .

5. Système selon l'une quelconque ou plusieurs des revendications précédentes, **caractérisé en ce que** le module de localisation (9) présente des moyens de mise à disposition de contenus de signaux (12) couplés aux moyens d'enregistrement des ondes radio (10) et aux moyens de délivrance des ondes radio (14), et **en ce que** le deuxième signal radio (16, 16') est fourni par rapport à son contenu de signal par les moyens de mis à disposition de contenus de signaux (12), et **en ce qu'**en particulier des signaux radio (16, 16') délivrés, en particulier émis, par un module de localisation (9) défini contiennent une information associée spécifiquement audit module de localisation (9) défini, en particulier une information concernant la position ou les coordonnées du point de prélèvement d'un agent d'extinction (2) et/ou le type du point de prélèvement d'un agent d'extinction (2) et/ou la puissance disponible du point de prélèvement d'un agent d'extinction (2) et/ou une caractérisation du point de prélèvement d'un agent d'extinction (2).

6. Système selon l'une quelconque ou plusieurs des revendications, **caractérisé en ce que** le dispositif de localisation (5) mobile est disposé de manière fixe ou non dans un véhicule (30) et peut être porté en particulier par une personne (29) et est réalisé avec un dispositif d'alimentation en énergie propre.

7. Système selon l'une quelconque ou plusieurs des revendications précédentes, **caractérisé en ce qu'**au moins un émetteur radio (7) servant à émettre le premier signal radio (8) prédéterminé est prévu au niveau du dispositif de localisation (5) mobile et/ou dans un véhicule (30) de manière fixe ou non et/ou dans un bâtiment (28) de manière fixe ou non.

8. Système selon l'une quelconque ou plusieurs des revendications précédentes, **caractérisé en ce que** le dispositif de localisation (5) mobile présente un récepteur radio (23) approprié pour recevoir des signaux GPS (24), ainsi que des moyens de détermination de positions servant à déterminer la position propre (P₁) au moyen des signaux GPS (24).

9. Système selon l'une quelconque ou plusieurs des revendications précédentes, **caractérisé en ce que** le dispositif de localisation (5) mobile présente des moyens de restitution d'informations (20) servant à restituer de manière optique et/ou acoustique des signaux de localisation, où il est prévu en particulier que le dispositif de localisation (5) mobile présente des moyens d'affichage, en particulier des moyens d'affichage (22) cartographiques ou un écran multifonction servant à afficher la position propre (P₁) et la position respective (P₂, P₃) d'un ou de plusieurs points de prélèvement d'un agent d'extinction (2).

10. Système selon l'une quelconque ou plusieurs des revendications précédentes, **caractérisé en ce que** les moyens d'enregistrement d'ondes radio (10) présentent un récepteur radio (11), **en ce que** les moyens de mise à disposition de contenus de signaux (12) comprennent des moyens de traitement des données (13) et/ou une mémoire de données, en particulier une unité de calcul, et **en ce que** les moyens de délivrance des ondes radio (14) présentent un émetteur radio (15), ou **en ce que** les moyens d'enregistrement d'ondes radio (10), les moyens de mise à disposition de contenus de signaux (12) et les moyens de délivrance d'ondes radio (14) du module de localisation (9) sont réalisés sous la forme d'un module réflecteur radio.

11. Système selon l'une quelconque ou plusieurs des revendications précédentes, **caractérisé en ce que** le premier signal radio (8) prédéterminé commute le module de localisation (9) depuis un mode de repos ou de stand by, en particulier pour une durée prédéterminée, dans un état de fonctionnement, au cours duquel état de fonctionnement au moins le deuxième signal radio (16, 16') est délivré en continu, de manière quasi continue ou à des intervalles de temps plus grands.

12. Système selon l'une quelconque ou plusieurs des revendications précédentes, **caractérisé en ce que** le module de localisation (9) présente des moyens d'évaluation qui sont adaptés pour évaluer le premier signal radio (8) prédéterminé eu égard à la présence d'une information prédéterminée, associée en particulier au module de localisation (9) aux fins de la distinction avec les autres modules de localisation (9), et **en ce que** les moyens d'évaluation amènent le module de localisation (9), uniquement en présence de ladite information, en partant de l'état de repos ou de stand by, dans l'état de fonctionnement.

13. Système selon l'une quelconque ou plusieurs des revendications précédentes, **caractérisé en ce que** sont prévus comme points de prélèvement d'un agent d'extinction (2) un nombre de prises d'eau (3) et/ou au moins un étang à incendie (35) et/ou au moins un cours d'eau.

14. Système selon l'une quelconque ou plusieurs des revendications précédentes, **caractérisé en ce que** le système (1) comprend au moins une mémoire de données relatives aux points de prélèvement d'un agent d'extinction (34), qui contient pour plusieurs points de prélèvement d'un agent d'extinction (2) des données relatives aux points de prélèvement d'un agent d'extinction associées de manière respectivement spécifique et/ou à un groupe, en particulier concernant les coordonnées et/ou le type et/ou la puissance disponible et/ou une caractérisation des points de prélèvement d'un agent d'extinction (2) respectifs, où la mémoire de données relatives aux points de prélèvement d'un agent d'extinction (34) se trouve dans le dispositif de localisation (5) mobile, ou est réalisée de manière séparée de ce dernier et est reliée à un émetteur radio (7) aux fins de la transmission radio des données relatives aux points de prélèvement d'un agent d'extinction au dispositif de localisation (5) mobile.

15. Procédé servant à la localisation de points de prélèvement d'un agent d'extinction (2), en particulier servant à la localisation de dispositifs de prélèvement d'un agent d'extinction, tels que par exemple des prises d'eau (3) pour le prélèvement d'eau, **caractérisé en ce qu'**un système (1) est utilisé aux fins de la localisation de points de prélèvement d'un agent d'extinction selon l'une quelconque ou plusieurs des revendications précédentes.
